Europäisches Patentamt

(19) European Patent Office

Office européen des brevets

(11) Publication number: **0 101 637**
**B1**

(12) **EUROPEAN PATENT SPECIFICATION**

(45) Date of publication of patent specification: 22.07.87

(21) Application number: 83201200.9

(22) Date of filing: 17.08.83

(51) Int. Cl.⁴: **B 07 B 1/14,** B 07 B 1/50, A 01 D 17/06

(54) **Bulk bin.**

(30) Priority: 18.08.82 NL 8203244

(43) Date of publication of application:
29.02.84 Bulletin 84/09

(45) Publication of the grant of the patent:
22.07.87 Bulletin 87/30

(84) Designated Contracting States:
BE DE FR GB NL

(56) References cited:
AU-B- 468 224
DE-A-2 946 312
DE-A-3 027 651
FR-A-1 491 435
FR-A-2 404 478
US-A-3 023 904
US-A-3 721 345

(73) Proprietor: Zijlstra & Bolhuis B.V.
Beneden Dwarsdiep 25
NL-9645 LA Veendam (NL)

(72) Inventor: Pastoor, Harm
Continentenlaan 14
NL-9642 BG Veendam (NL)

(74) Representative: Urbanus, Henricus Maria, Ir.
et al
c/o Vereenigde Octrooibureaux Nieuwe
Parklaan 107
NL-2587 BP 's-Gravenhage (NL)

## Description

The invention relates to a bulk bin for agricultural products, comprising a conveyor bottom slanting upwardly and arranged, in operation, to convey agricultural products charged into the bin from the lower end thereof upwards; a roller screen unit onto which, in operation, the products are deposited by the conveyor bottom and which comprises a number of parallel rod-shaped rollers, the longitudinal axes of the rollers lying in one and the same plane and the rollers in operation being driven for rotation around their longitudinal axes; and a product-discharge device disposed downstream of said roller screen unit.

A bulk bin of this type is known by practice. In the known bulk bin, the roller screen unit, which serves to remove earth, rocks, undersized products and the like, consists of a plurality of spaced, side-by-side, drivable rollers extending transversely to the direction of transport of the conveyor bottom. The prior roller screen unit is further provided with means for adjusting the interspace between the individual rollers of the roller screen unit.

Although, generally speaking, the prior roller screen unit effectively separates earth, rocks, undersize products and the like from the agricultural products, for example potatoes, practice has shown that in the case of some kinds of soil and/or weather conditions the roller screen unit becomes clogged, even if the spacing between the rollers is set at the maximum value.

A similar bulk bin is disclosed in FR—A—1,491,435. In this known bulk bin the roller screen unit comprises a number of cylindrical cages, having driven shafts, the distance between the shafts being fixed. This roller screen unit may also become clogged, especially when the soil adhering to the agricultural products is sticky and/or wet.

It is an object of the present invention to overcome the drawbacks of the known bulk bins. For this purpose, according to the invention, a bulk bin of the kind described above is characterized by means for continuously varying in said plane the spacing between adjacent rollers of the roller screen unit during operation.

It is observed that from US—A—3,023,904 an oscillating screen or sieve is known comprising adjacently spaced bars formed on both side with lateral projections. In operation each bar oscillates relatively to its adjacent bars, so that the lateral projections of two adjacent bars rotate around each other. Thus this known screen is not a roller screen having rollers in rotating in operation around their longitudinal axes and lying in the rest position as well as during operation in one and the same plane. Too, the sieving effect of the known screens is provided by the lateral projections of the bars and the distance between said lateral projections is not variable during operation.

Further it is observed that from DE—A—2,046,312 a screening device is known comprising a number of groups of fixedly spaced parallel rods. The rods of one group are positioned in the spaces between the rods of another group. In operation the rods do not rotate but are moved together in a direction of transport perpendicular to the longitudinal direction of the rods. Further the groups of rods in operation are moved up and down in a vertical direction perpendicular to the direction of transport..Thus the distance between the rods as seen in the direction of transport is not variable during operation.

One embodiment of the invention will be described in greater detail hereinafter, by way of example, with reference to the accompanying drawings. In said drawings,

Fig. 1 diagrammatically shows an example of a prior bulk bin;

Figs. 2 and 3 diagrammatically show the construction of a prior roller screen unit;

Fig. 4 diagrammatically shows an embodiment of an apparatus according to the present invention; and

Fig. 5 diagrammatically shows, in plan view, a detail of an apparatus according to the invention.

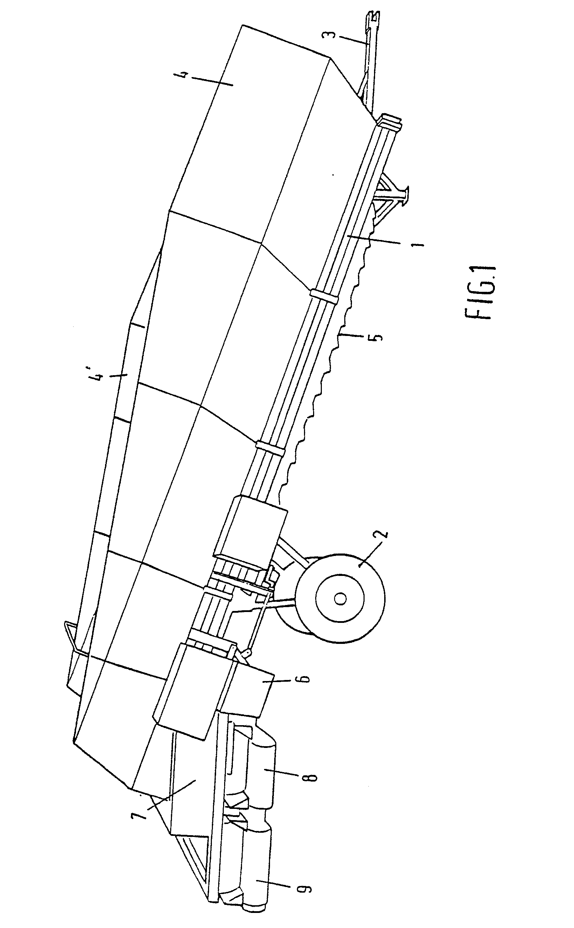

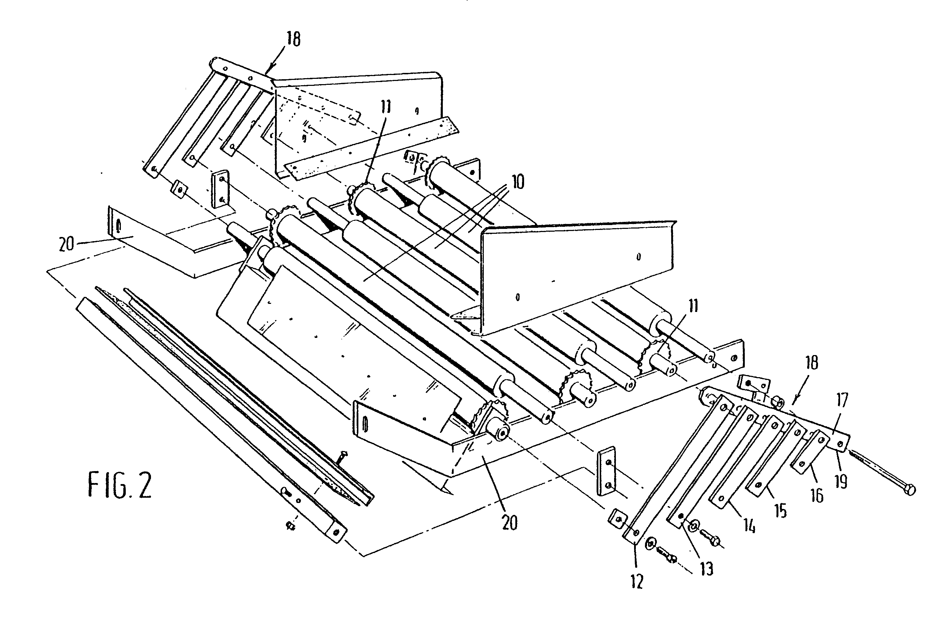

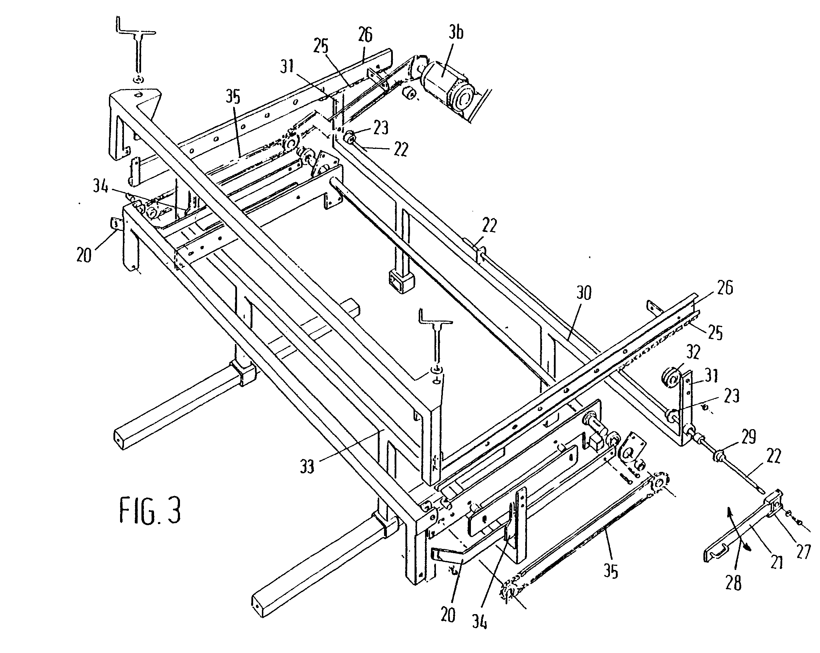

The bulk bin shown diagrammatically in Fig. 1 in side-elevational view comprises a frame 1, which is mobile owing to the provision of wheels 2 and a drawbar 3. The bulk bin proper is formed by upright sidewalls 4, 4', between which is disposed an endless conveyor bottom, the bottom return run of which is designated by 5. The conveyor bottom is driven by a drive unit 6 arranged adjacent to the upper end of the elevation path. Disposed beyond the upper end of the elevation path is a roller screen unit, diagrammatically shown at 7, and shown in more detail in Figs. 2 and 3. Disposed underneath the roller screen unit is a transverse conveyor 8 for discharging material passed by the roller screen unit. In operation, the rollers of the roller screen unit are driven in such a manner that the produce is transported by the rollers to a second transverse conveyor 9, capable of transporting the produce further.

Fig. 2 shows a diagrammatic exploded view of the roller screen unit. The unit comprises a plurality of rollers 10, each provided with a sprocket 11 capable of cooperating with a drive chain 35, shown in Fig. 3, and arranged to rotate the rollers.

The shafts of the rollers are secured at both ends to the free ends of strips 12—16, of various lengths, and together with a connecting strip 17 forming a linkage 18. One end 19 of the connecting strip is fixedly, but pivotally connected to a fixed frame member 20. In the embodiment shown, this end 19 is adjacent to the roller located closest to the conveyor bottom (on the right-hand side in Fig. 2).

The adjustment of the mutual spacing between the rollers is effected by moving the shaft of one of the other rollers, preferably the shaft of the roller located closest to the product conveyor 9 (on the left-hand side of Fig. 2) transversely to its longitudinal direction. Owing to the operation of the linkage the other rollers will then be moved as well, and the interspace is changed.

Fig. 3 shows the handle for adjusting the roller spacing. Handle 21 is secured at one end to a shaft 22 carrying a fixed pinion 23 arranged to cooperate with a rack 25, constituted in this case by a length of chain secured to a girder 26 of the frame.

Handle 21 is arranged to pivot relative to a bearing block 27 secured to shaft 22, in a plane containing the shaft. So long as the handle is in its inoperative position, a pin secured to the handle engages with a cogwheel 29 also fixedly secured to shaft 22, and the shaft can be turned by turning the handle according to the double arrow 28. If, however, the handle is pulled outwards in the plane referred to, the pin is no longer in engagement with cogwheel 29, and the handle is capable of being freely rotated relatively to shaft 22 and cogwheel 29. When the handle is turned while the pin is in engagement with cogwheel 29, pinion 23 rolls on rack 25, thereby taking along shaft 22 transversely to its longitudinal direction.

Shaft 22 is journalled in a transverse girder 30, provided at its ends with projections 31 carrying rollers 32 which fall into a profile of girder 26.

Girder 30 forms part of a subframe carrying forks 34 coinciding with the shaft of the front roller.

When handle 21 is turned, therefore, subframe 33 with the forks is moved relatively to the fixed frame members 20, so that the front roller and, via the linkage, also the other rollers, are moved relatively to the rearmost roller, so that the interspace between the rollers is changed.

Fig. 3 further shows drive chains 35 for the rollers, and a drive motor 36.

According to the present invention, the spacing between the rollers is continuously varied during operation, because experiments have surprisingly shown that this minimizes the chance of the roller screen unit becoming clogged.

Such a continuous variation of the roller spacing in a roller screen unit can be accomplished in various ways.

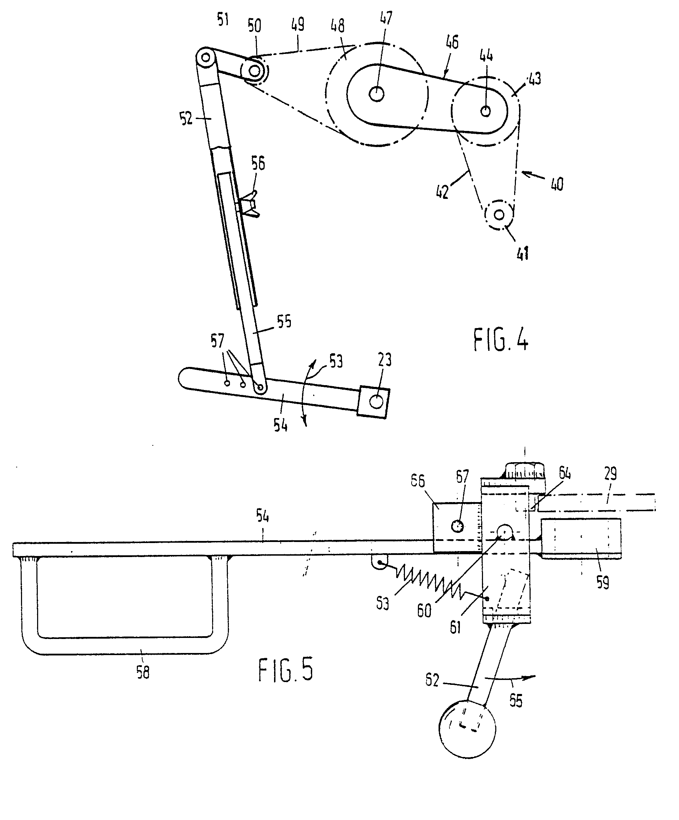

Fig. 4 shows, by way of example, one of the possible embodiments. The drive unit indicated at 6 in Fig. 1 is shown at 40 in Fig. 4. The drive unit comprises a first driven pulley 41, which via a belt 42 drives a larger pulley 43.

By way of a transmission already present in the prior bulk bins, which is housed in a gear box 46, a sprocket 48, mounted in accordance with the present invention on an outwardly prolonged shaft 47, is driven. In operation, this sprocket drives, via a chain 49, a second, smaller sprocket 50 to produce the desired rotary velocity.

Secured to sprocket 50 is an eccentric crank 51, which is connected to a crank arm 52, which in turn is connected to operating handle 21. Accordingly, when the drive unit is in operation, the operating handle is continuously moved up and down, as indicated by a double arrow 53 in Fig. 4. As a result the spacing between the rollers of the roller screen unit is continuously varied as well.

In this case, too, the operating handle, now designated by 54, is, in operation, coupled with sprocket 29, which is fixedly secured to the shaft, by means of a pin extending between the teeth of the sprocket. In the present embodiment, however, owing to the coupling with the crank arm 52, the handle is no longer capable of being moved outwards, pivoting in the plane of shaft 23. Accordingly, the operating handle is modified, in a manner to be described hereinafter in order that it may yet be disengaged from sprocket 29.

By turning the sprocket with the operating handle, the initial spacing of the rollers can be adjusted.

The accuracy of this adjustment is determined by the pitch of the teeth of sprocket 29.

Fine adjustment has been rendered possible by providing the crank arm 52 with an arm member 55 that is adjustable relatively to the part secured to crank 51. In the embodiment shown, the adjustable arm member falls in a hollow portion of the part secured to the crank, in which it can be fixed in a desired position by means of a winged bolt 56.

Furthermore, operating handle 54 is provided with a plurality of holes 57. By selecting one of these holes as the point of attachment of crank arm member 55, the initial stroke length of the rollers can be adjusted.

The operating handle modified in accordance with the present invention is shown in more detail in plan view in Fig. 5.

Operating handle 54 is provided with a grip 58 and with a bearing block 59 falling around shaft 22. The sprocket 29, mounted on shaft 22, is shown in dotted lines.

Mounted on the operating handle next to bearing block 59, for pivoting movement about a shaft 60 extending transversely to the plane of drawing, is an uncoupling mechanism. The uncoupling mechanism comprises a plate member 61, extending transversely to the operating handle, and provided with a bore to receive shaft 60.

Plate member 61 carries at its one end remote from the operating handle a grip 62 which via a tension spring 63 is connected to the operating handle. Plate member 61 is provided at its other end with a pin 64 normally falling between two teeth of sprocket 29 under the influence of tension spring 63. However, by moving grip 62 in the direction of arrow 65, pin 64 can be brought out of engagement with sprocket 29.

The pin can then be placed between two other teeth of the sprocket to vary the initial spacing between the rollers.

Furthermore, this construction serves as a safeguard. If, for example, a hard obstacle is present between the rollers, shaft 22 and hence sprocket 29, is unable to complete the stroke set. In that case, however, pin 64 is capable of sliding over the teeth of the sprocket, thereby extending spring 63, so that any damage to the rollers or other structural parts is prevented.

Finally, the uncoupling mechanism is further provided with a plate-shaped extension 66, secured to the first plate member 61, and disposed slightly above the body of the operating handle, which projection is provided with a vertical, threaded bore 67 to receive a winged bolt or like member. By means of this winged bolt the uncoupling mechanism can be fixed in the uncoupled position.

## Claims

1. A bulk bin for agricultural products, comprising a conveyor bottom slanting upwardly and arranged, in operation, to convey agricultural products charged into the bin (4, 4') from the lower end thereof upwards; a roller screen unit (7) onto which, in operation, the products are deposited by the conveyor bottom and which comprises a number of parallel rod-shaped rollers (10), the longitudinal axes of the rollers lying in one and the same plane and the rollers in operation being driven for rotation around their longitudinal axes; and a product-discharge device (9) disposed downstream of said roller screen unit, characterized by means for continuously varying in said plane the spacing between adjacent rollers (10) of the roller screen unit (7) during operation.

2. A bulk bin according to claim 1, comprising an operating means (21; 54) for adjusting the spacing between the rollers (10) of the roller screen unit (7), characterized by a crank mechanism (50, 51) coupled to a shaft (47) driven in operation of the bulk bin, said crank mechanism being connected to said operating means (21; 54) via a crank arm (52, 55).

3. A bulk bin according to claim 2, characterized in that the length of the crank arm (52, 55) is adjustable.

4. A bulk bin according to claim 2 or 3, characterized in that said operating means (21, 54) is provided with a plurality of alternative points (57) of attachment for said crank arm (52, 55).

5. A bulk bin according to any one of claims 2—4, characterized by an uncoupling mechanism (61, 62, 64) arranged on the operating means (21, 54).

6. A bulk bin according to claim 5, in which the operating means (21; 54) is provided with a pin (64) engaging with a cogwheel (29), characterized in that said pin (64) is secured to the uncoupling mechanism (61, 62, 64).

7. A bulk bin according to claim 5 or 6, characterized in that the uncoupling mechanism (61, 62, 64) comprises a plate member (61) extending transversely to the operating means (21; 54), and pivoted relative to the operating handle, said plate member carrying a grip (62) at its one end remote from the operating means, and the pin (64) being secured at the other end remote from the operating means, with the pin being in engagement with the cogwheel (29).

8. A bulk bin according to any one of claims 5—7, characterized in that the uncoupling mechanism (61, 62, 64) further comprises means (66, 67) for locking the uncoupling mechanism relatively to the operating means (21; 54) in the uncoupled position.

## Patentansprüche

1. Schüttgutbunker für landwirtschaftliche Produkte, mit einem Förderboden, der schräg aufwärts verläuft und bei Betrieb so angeordnet ist, daß er in den Bunker (4, 4') aufgegebene landwirtschaftliche Produkte von seinem unteren Ende aufwärts fördert; mit einer Rollenrosteinheit (7), der der Förderboden bei Betrieb die Produkte zuführt und die mehrere parallele stangenförmige Rollen (10) aufweist, wobei die Längsachsen der Rollen in ein und derselben Ebene liegen und die Rollen bei Betrieb zur Drehung um ihre Längsachsen angetrieben sind; und mit einer in Förderrichtung hinter der Rollenrosteinheit angeordneten Produktaustragvorrichtung (9), gekennzeichnet durch eine Vorrichtung, die bei Betrieb den Abstand zwischen benachbarten Rollen (10) der Rollenrosteinheit (7) in der genannten Ebene kontinuierlich verändert.

2. Schüttgutbunker nach Anspruch 1, mit einem Bedienungshebel (21; 54) zur Einstellung des Abstandes zwischen den Rollen (10) der Rollenrosteinheit (7), gekennzeichnet durch einen Kurbelmechanismus (50, 51), der an eine bei Betrieb angetriebene Welle (47) des Schüttgutbunkers angeschlossen ist und der über einen Kurbelarm (52, 55) mit dem Bedienungshebel (21; 54) verbunden ist.

3. Schüttgutbunker nach Anspruch 2, dadurch gekennzeichnet, daß die Länge des Kurbelarms (52, 53) verstellbar ist.

4. Schüttgutbunker nach Anspruch 2 oder 3, dadurch gekennzeichnet, daß der Bedienungshebel (21, 54) mehrere Alternativ-Befestigungsstellen (57) für den Kurbelarm (52, 55) aufweist.

5. Schüttgutbunker nach einem der Ansprüche 2—4, gekennzeichnet durch einen an dem Bedienungshebel (21, 54) angeordneten Entkupplungsmechanismus (61, 62, 64).

6. Schüttgutbunker nach Anspruch 5, bei dem der Bedienungshebel (21; 54) einen in ein Zahnrad (29) eingreifenden Stift (64) aufweist, dadurch gekennzeichnet, daß der Stift (64) an dem Entkupplungsmechanismus (61, 62, 63) befestigt ist.

7. Schüttgutbunker nach Anspruch 5 oder 6, dadurch gekennzeichnet, daß der Entkupplungsmechanismus (61, 62, 64) einen Plattenteil (61) aufweist, der sich quer zur Längsrichtung des Bedienungshebels (21; 54) erstreckt und in Bezug auf den Bedienungshebel drehbar ist, und daß der Plattenteil an seinem einen dem Bedienungshebel abgewandten Ende einen Griff (62) trägt und an seinem anderen dem Bedienungshebel abgewandten Ende der Stift (64) befestigt ist, der mit dem Zahnrad (29) in Eingriff steht.

8. Schüttgutbunker nach einem der Ansprüche 5—7, dadurch gekennzeichnet, daß der Entkupplungsmechanismus (61, 62, 64) ferner eine Vorrichtung (66, 67) aufweist, die den Entkupplungsmechanismus in Bezug auf den Bedienungshebel (21; 54) in der entkuppelten Position arretiert.

## Revendications

1. Benne de transport en vrac de produits agricoles, comprenant un fond transporteur incliné vers le haut et disposé, lors du fonctionnement, pour transporter des produits agricoles chargés dans la benne (4, 4') à partir de son extrémité inférieure vers le haut; une unité de tamisage à rouleaux (7) sur laquelle, lors du fonctionnement, les produits sont déposés par le fond transporteur et qui comprend plusieurs rouleaux parallèles en forme de tige (10), les axes longitudinaux des rouleaux se trouvant sur le même plan et les rouleaux étant entraînés en rotation, lors du fonctionnement, autour de leur axes longitudinaux; et un dispositif de déchargement de produit (9) prévu en aval de ladite unité de tamisage à rouleaux, caractérisée par des moyens pour faire varier continuellement dans ledit plan l'espacement entre des rouleaux adjacents (10) de l'unité de tamisage à rouleaux (7) lors du fonctionnement.

2. Benne de transport en vrac conforme à la revendication 1, comprenant un levier de manoeuvre (21; 54) pour régler l'espacement entre les rouleaux (10) de l'unité de tamisage à rouleaux (7), caractérisée par un mécanisme à manivelle (50, 51) couplé à un arbre (47) de la benne de transport en vrac, ledit arbre étant entraîné lors du fonctionnement, ledit mécanisme à manivelle étant relié audit levier de manoeuvre (21; 54) par l'intermédiaire d'un bras de manivelle (52, 55).

3. Benne de transport en vrac conforme à la revendication 2, caractérisée en ce que la longueur du bras de manivelle (52, 55) est réglable.

4. Benne de transport en vrac conforme à la revendication 2 ou 3, caractérisée en ce que ledit levier de manoeuvre (21, 54) est muni de plusieurs points (57) de fixation dudit bras de manivelle (52, 55).

5. Benne de transport en vrac conforme à l'une quelconque des revendications 2 à 3, caractérisée par un mécanisme de découplage (61, 62, 64) disposé sur le levier de manoeuvre (21, 54).

6. Benne de transport en vrac conforme à la revendication 5, dans laquelle le levier de manoeuvre (21; 54) est muni d'un ergot (64) coopérant avec une roue dentée (29), caractérisée en ce que ledit ergot (64) est fixé au mécanisme de découplage (61, 62, 64).

7. Benne de transport en vrac conforme à la revendication 5 ou 6, caractérisée en ce que le mécanisme de découplage (61, 62, 64) comprend un élément plat (61) qui s'étend transversalement au sens longitudinal du levier de manoeuvre (21; 54) et qui pivote par rapport au levier de manoeuvre, ledit élément plat supportant une poignée (62) à l'une de ses extrémités opposées au levier de manoeuvre, et l'ergot (64) étant fixé à l'autre extrémité opposée au levier de manoeuvre et coopérant avec la roue dentée (29).

8. Benne de transport en vrac conforme à l'une quelconque des revendications 5 à 7, caractérisée en ce que le mécanisme de découplage (61, 62, 64) comprend également des moyens (66, 67) pour verrouiller le mécanisme de découplage en position découplée par rapport au levier de manoeuvre (21; 54).

FIG.1

FIG.2

FIG. 3

0 101 637

FIG.4

FIG.5